# EUROPÄISCHE PATENTANMELDUNG

(11) **EP 3 025 998 A1**
(43) Veröffentlichungstag der Anmeldung: **01.06.2016**
(21) Anmeldenummer: 14194719.2
(22) Anmeldetag: 25.11.2014
(51) Int. Cl.: B66B 15/04, F16H 55/36

(54) **Rolle einer Aufzugsanlage**

(71) Anmelder: Inventio AG, 6052 Hergiswil NW (CH)
(72) Erfinder: Cambruzzi, Andrea, 8057 Zürich (CH); Zapf, Volker, 6012 Obernau (CH)

(57) **Zusammenfassung**

Eine Aufzugsanlage hat ein riemenartiges Tragmittel, welches über zumindest eine Rolle geführt ist. Die Rolle weist dabei einen Innenring und einen Aussenring mit einer Traktionsoberfläche auf. Der Aussenring umfasst einen Kunststoffring, welcher auf seiner Aussenseite die Traktionsoberfläche bildet.

## Beschreibung

Die vorliegende Erfindung betrifft eine Aufzugsanlage und insbesondere eine Ausgestaltung einer Rolle in dieser Aufzugsanlage.

Bei Aufzugsanlagen werden zum Tragen und / oder Antreiben einer Aufzugskabine herkömmlicherweise Stahlseile als Tragmittel eingesetzt. Gemäss einer Weiterentwicklung solcher Stahlseile werden auch riemenartige Tragmittel, welche Zugträger und eine um die Zugträger angeordnete Ummantelung aufweisen, eingesetzt. Solch riemenartige Tragmittel sind, ähnlich wie herkömmliche Stahlseile, über Treibscheiben und Umlenkrollen in der Aufzugsanlage geführt. Im Gegensatz zu Stahlseilen werden riemenartige Tragmittel jedoch nicht in Rillen in den Rollen bzw. Treibscheiben geführt, sondern die riemenartigen Tragmittel liegen im Wesentlichen auf den Umlenkrollen bzw. Treibscheiben auf.

Aufgrund des Ersatzes von Stahlseilen durch riemenartige Tragmittel mit ummantelten Zugträgern verändert sich das Zusammenwirken von Rollen mit Tragmitteln nicht nur bezüglich der Führung der Tragmittel auf den Rollen, sondern auch bezüglich der Traktion zwischen Tragmittel und Rollenoberfläche. Grundsätzlich erhöht sich dabei ein Reibungskoeffizient zwischen Rolle und Tragmittel, wenn anstelle von Stahlseilen Tragmittel mit einer Ummantelung aus Kunststoff, beispielsweise Polyurethan, eingesetzt werden. Ein höherer Reibungskoeffizient kann einerseits wünschenswert sein, um eine ausreichende Traktion sicherzustellen, andererseits kann ein höherer Reibungskoeffizient auch negative Auswirkungen auf das Gesamtsystem haben, weil beispielsweise eine seitliche Führung des Tragmittels auf der Rolle erschwert wird.

Es ist somit wünschenswert, den Reibungskoeffizient zwischen Rolle und Tragmittel den jeweiligen Bedürfnissen anpassen zu können. Die WO2013172824 offenbart beschichtete Rollen für Aufzugsanlagen. Durch eine Wahl der Beschichtung kann somit der Reibungskoeffizient zwischen Rolle und Tragmittel beeinflusst werden. Nachteilig an dieser Lösung ist es jedoch, dass zur Beschichtung von Stahlrollen nur eine begrenzte Anzahl an Werkstoffen zur Verfügung steht, sodass eine Beeinflussung des Reibungskoeffizienten nur im Rahmen der wenigen verfügbaren

Beschichtungswerkstoffen ausführbar ist.

Es ist daher eine Aufgabe der vorliegenden Erfindung, eine Aufzugsanlage zur Verfügung zu stellen, in welcher die im Stand der Technik auftretenden Nachteile nicht bestehen. Zudem soll eine Aufzugsanlage zur Verfügung gestellt werden, in welcher Tragmittel und Rollen besser aufeinander abgestimmt sind.

Diese Aufgabe wird gelöst durch eine Aufzugsanlage, in welcher zunächst ein riemenartiges Tragmittel über zumindest eine Rolle geführt ist. Die Rolle weist dabei einen Innenring und einen Aussenring mit einer Traktionsoberfläche auf, wobei der Aussenring einen Kunststoffring umfasst, welcher auf seiner Aussenseite die Traktionsoberfläche bildet.

Diese Anordnung hat den Vorteil, dass dadurch eine viel grössere Anzahl an Werkstoffen zur Bildung der Traktionsoberfläche zur Verfügung steht, als dies bei Beschichtungen gemäss eingangs genanntem Stand der Technik der Fall ist. Somit können Eigenschaften der Traktionsoberfläche, wie beispielsweise Abnutzungsbeständigkeit oder Oberflächenrauheit, genauer auf die jeweiligen Bedürfnisse abgestimmt werden.

Eine solche Anordnung hat weiterhin den Vorteil, dass dadurch eine Drehmasse der Rolle verkleinert werden kann. Beispielsweise können Kunststoffe für den Kunststoffring gewählt werden, welche ein erheblich geringeres Eigengewicht als entsprechende Stahlringe aufweisen. Durch eine Verkleinerung der Drehmasse der Rolle kann schliesslich ein Energiebedarf der Aufzugsanlage verkleinert werden, weil bei jedem Beschleunigungsvorgang weniger Masse in Bewegung gesetzt werden muss.

In einem vorteilhaften Ausführungsbeispiel umfasst der Aussenring einen inneren Ring aus Metall und einen äusseren Ring aus Kunststoff. Dies hat den Vorteil, dass dadurch herkömmliche Rollenlager verwendet werden können, weil der Kunststoffring nicht direkt mit dem Lager in Wechselwirkung tritt. Somit kann bezüglich der Lagerung auf bewährte Lösungen zurückgegriffen werden.

In einem vorteilhaften Ausführungsbeispiel hat der innere Ring Bordscheiben. Dies hat den Vorteil, dass bei einem Abschmelzen des äusseren Ringes aus Kunststoff in einem Brandfall das Tragmittel von den Bordscheiben des inneren Ringes auf der Rolle seitlich geführt ist, sodass das Tragmittel nicht seitlich von der Rolle abrutschen kann.

In einem vorteilhaften Ausführungsbeispiel ist der Aussenring einstückig als Kunststoffring ausgebildet. Dies hat den Vorteil, dass dadurch keine Verbindung zwischen einem inneren Ring und einem äusseren Ring sichergestellt werden muss, da der Aussenring einstückig ist. Zudem kann dadurch die Drehmasse der Rolle zusätzlich verkleinert werden, weil ein grösserer Bestandteil der Rolle aus Kunststoff anstelle von Metall ausgebildet ist.

In einem vorteilhaften Ausführungsbeispiel ist die Traktionsoberfläche bombiert ausgeführt. Dies hat den Vorteil, dass dadurch Tragmittel mit einem im Wesentlichen rechteckigen Querschnitt seitlich auf der Rolle geführt werden können.

In einem vorteilhaften Ausführungsbeispiel ist die Traktionsoberfläche konturiert ausgebildet. In einer vorteilhaften Weiterbildung ist die Traktionsoberfläche komplementär zu einem Querschnitt des riemenartigen Tragmittels ausgeführt. In einer vorteilhaften Weiterbildung umfasst die Traktionsoberfläche in einer Umfangsrichtung mehrere im Wesentlichen V-förmige Rippen und mehrere im Wesentlichen V-förmige Nuten. Dies hat den Vorteil, dass dadurch eine seitliche Führung des Tragmittels auf der Rolle gewährleistet werden kann.

In einem vorteilhaften Ausführungsbeispiel hat der Aussenring Bordscheiben. Dies hat den Vorteil, dass dadurch ein seitliches Abrutschen des Tragmittels von der Rolle verhindert oder erschwert ist. Solche Bordscheiben erleichtern zudem eine Positionierung des Tragmittels bei einer Installation der Aufzugsanlage.

In einem vorteilhaften Ausführungsbeispiel umfasst der Kunststoffring zumindest ein Polyamid. Dies hat den Vorteil, dass dadurch für den Einsatz mit Tragmitteln mit einem Kunststoffmantel besonders günstige Eigenschaften der Traktionsoberfläche erreicht werden können.

In einer vorteilhaften Weiterbildung umfasst der Kunststoffring ein Polyamid mit einem Glasfaseranteil.

In einer vorteilhaften Weiterbildung ist dem Polyamid zumindest ein Additiv zugesetzt. Dies hat den Vorteil, dass dadurch die Materialeigenschaften genauer auf die bestehenden Bedürfnisse abgestimmt werden können. So können beispielsweise eine Reibeigenschaft oder eine Abnutzungseigenschaft der Traktionsoberfläche mit Hilfe eines entsprechenden Additives gezielt verändert werden.

Als Additive können beispielsweise Wachse, Öle oder Molybdändisulfid (MoS₂) eingesetzt werden. Je nach Ausgestaltung des Mantels des Tragmittels, des Tragmittelquerschnittes, der Tragmittelführung in der Aufzugsanlage und anderen spezifischen Gegebenheiten einer Aufzugsanlage kann ein den Anforderungen entsprechendes Additiv eingesetzt werden.

In einem vorteilhaften Ausführungsbeispiel umfasst der Kunststoffring zumindest einen elektrisch leitfähigen Kunststoff. Dies hat den Vorteil, dass dadurch gewisse Schäden am riemenartigen Tragmittel überwacht werden können. So können beispielsweise aus dem Mantel des Tragmittels hervorstehende Drähte oder defekte Stellen der Ummantelung erkannt werden, in dem ein elektrischer Kontakt zwischen der Rolle und den Zugträgern des riemenartigen Tragmittels entsteht. Mit einer entsprechenden Überwachungseinrichtung kann ein solches Entstehen eines elektrischen Kontaktes festgestellt werden.

In einem vorteilhaften Ausführungsbeispiel ist die Traktionsoberfläche derart ausgeführt, dass mit einer Ummantelung des riemenartigen Tragmittels aus Polyurethan ein Reibungskoeffizient µ zwischen 0,1 und 0,5, bevorzugt zwischen 0,2 und 0,4, besonders bevorzugt zwischen 0,25 und 0,35 resultiert. Dies hat den Vorteil, dass ein solcher Reibungskoeffizient einerseits eine genügend hohe Traktion sicherstellt, jedoch andererseits verhindert, dass bei einem Schrägzug des riemenartigen Tragmittels auf der Rolle ein seitlicher Riemenversatz stattfindet. Es hat sich nämlich gezeigt, dass bei zu hohen Reibungskoeffizienten, insbesondere bei komplementär ausgestalteten riemenartigen Tragmitteln und Traktionsoberflächen, die Tragmittel seitlich versetzen. Durch das Herabsetzen des Reibungskoeffizienten im Gegensatz zu Stahlrollen kann diesem Problem vorgebeugt werden.

In einem vorteilhaften Ausführungsbeispiel ist die Rolle eine Gegengewichtsumlenkrolle oder eine Kabinenumlenkrolle.

In einem vorteilhaften Ausführungsbeispiel weist der Kunststoffring ein Dicke, gemessen von der Traktionsoberfläche in Richtung eines Rotationszentrums der Rolle, von mindestens 5mm, vorzugsweise von mindestens 7mm, besonders bevorzugt von mindestens 10mm auf. Dies hat den Vorteil, dass dadurch eine langlebige Traktionsoberfläche mit gleichbleibenden Eigenschaften erreicht werden kann.

Die hier vorgeschlagenen Rollen können grundsätzlich an verschiedenen Orten in einer Aufzugsanlage und in verschiedenen Typen von Aufzugsanlagen eingesetzt werden. So können solche Rolle in Aufzugsanlagen mit Gegengewicht und auch in Aufzugsanlagen ohne Gegengewicht eingesetzt werden. Weiterhin können solche Rollen in Aufzugsanlagen mit unterschiedlichen Aufhängungen eingesetzt werden, wie beispielsweise 1:1 Aufhängungen, 2:1 Aufhängungen, 4:1 Aufhängungen. Die Rollen können als Umlenkrollen an einem Gegengewicht oder einer Kabine oder in einem Schacht angeordnet sein, oder die Rolle kann als Treibscheibe eines Antriebes ausgebildet sein.

Anhand von Figuren wird die Erfindung symbolisch und beispielhaft näher erläutert. Es zeigen:
- Figur 1: eine schematische Darstellung einer beispielhaften Aufzugsanlage; und
- Figur 2a: eine schematische Darstellung einer beispielhaften Rolle; und
- Figur 2b: eine schematische Darstellung einer beispielhaften Rolle.

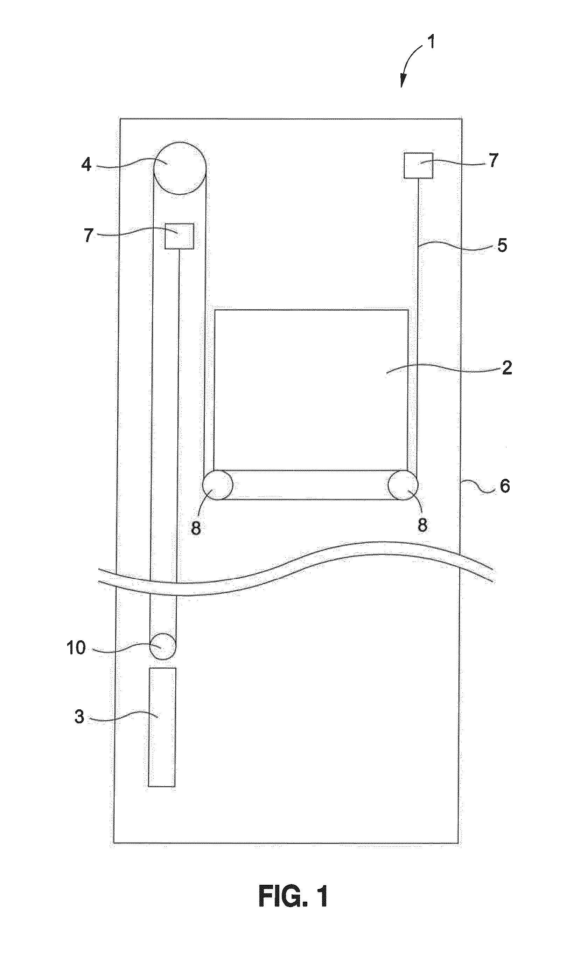

In Figur 1 ist eine beispielhafte Ausführungsform einer Aufzugsanlage 1 dargestellt. Die Aufzugsanlage umfasst eine Kabine 2, ein Gegengewicht 3, einen Antrieb 4 und ein riemenartiges Tragmittel 5. Dabei ist das riemenartige Tragmittel 5 durch eine erste Tragmittelbefestigung 7 in der Aufzugsanlage fixiert, über eine Gegengewichtsumlenkrolle 10 geführt, über eine Treibscheibe 4 des Antriebs geführt, über zwei Kabinenumlenkrollen 8 geführt und durch eine zweite Tragmittelbefestigung 7 wiederum in der Aufzugsanlage 1 befestigt.

In diesem Ausführungsbeispiel ist die Aufzugsanlage 1 in einem Schacht 6 angeordnet. In einer alternativen nicht dargestellten Ausführungsform ist die Aufzugsanlage nicht in einem Schacht angeordnet, sondern beispielsweise an einer Aussenwand eines Gebäudes.

Die beispielhafte Aufzugsanlage 1 in Figur 1 umfasst ein Gegengewicht 3. In einer nicht dargestellten alternativen Ausführungsform umfasst die Aufzugsanlage kein Gegengewicht. In der beispielhaften Aufzugsanlage 1 in Figur 1 sind sowohl Gegengewicht 3 wie auch Kabine 2 mit einer 2:1 Aufhängung aufgehängt. In einer nicht dargestellten alternativen Ausführungsform können sowohl das Gegengewicht wie auch die Kabine mit einem anderen Übersetzungsverhältnis aufgehängt sein. Es sind zudem zahlreiche andere Ausführungsformen einer Aufzugsanlage möglich.

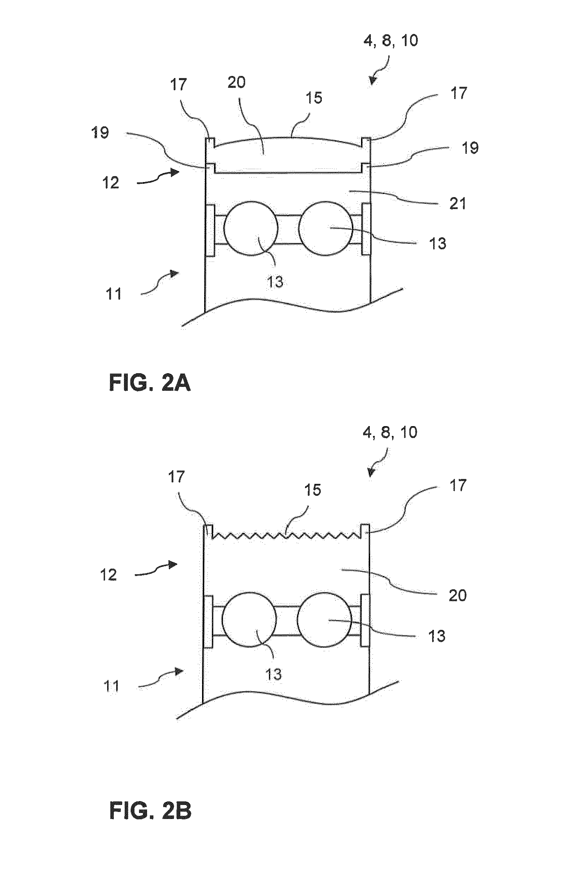

In Figur 2A ist eine beispielhafte Ausführungsform einer Rolle 4, 8, 10 schematisch dargestellt. Die Figur zeigt dabei Teile eines Querschnittes der Rolle 4, 8, 10. Die Rolle 4, 8, 10 weist einen Innenring 11 und einen Aussenring 12 auf. Zwischen dem Innenring 11 und dem Aussenring 12 sind Wälzkörper 13 angeordnet. In diesem Ausführungsbeispiel umfasst der Aussenring 12 einen inneren Ring 21 und einen äusseren Ring 20. Dabei ist der innere Ring 21 aus Metall gefertigt und der äussere Ring 20 ist aus Kunststoff gefertigt. Somit bildet der äussere Ring 20 die Traktionsfläche 15 der Rolle 4,8,10.

In diesem Ausführungsbeispiel hat der äussere Ring 20 Bordscheiben 17. Die Bordscheiben 17 sind dabei jeweils seitlich an die Traktionsfläche 15 anschliessend angeordnet, so dass ein seitliches Abrutschen des riemenartigen Tragmittels (nicht dargestellt) verhindert werden kann. Zudem weist auch der innere Ring 21 Bordscheiben 19 auf. Die Bordscheiben 19 verhindern im Falle eines Wegschmelzens des äusseren Ringes 20 in einem Brandfall ein Abrutschen des riemenartigen Tragmittels.

In diesem Ausführungsbeispiel ist die Traktionsfläche 15 bombiert ausgeführt. Dadurch können insbesondere riemenartige Tragmittel mit einem rechteckigen Querschnitt seitlich auf der Rolle 4, 8, 10 geführt werden.

In der Figur 2B ist eine weitere beispielhafte Ausführungsform einer Rolle 4, 8, 10 dargestellt. Wiederum ist ein Teil eines Querschnittes der Rolle 4, 8, 10 gezeigt. Im Unterschied zur Rolle aus Figur 2A ist der Aussenring 12 bei der Rolle in Figur 2B einstückig ausgebildet. Dabei ist der Aussenring 12 aus einem Kunststoff geformt. Der Aussenring 12 weist Bordscheiben 17 auf. Die Traktionsfläche 15 ist in diesem Ausführungsbeispiel konturiert ausgeführt. Dabei weist die Traktionsoberfläche 15 in einer Umfangsrichtung mehrere im Wesentlichen V-förmige Rippen und mehrere im Wesentlichen V-förmige Nuten auf. Die Traktionsoberfläche 15 ist dabei komplementär zu einer Traktionsfläche des riemenartigen Tragmittels (nicht dargestellt) ausgebildet. Die Rippen und Nuten der Traktionsoberfläche 15 erhöhen einerseits die Traktion zwischen dem riemenartigen Tragmittel und der Rolle 4, 8, 10 und führen andererseits das riemenartige Tragmittel seitlich auf der Rolle 4, 8, 10.

## Patentansprüche

1. Aufzugsanlage, in welcher ein riemenartiges Tragmittel (5) über zumindest eine Rolle (4, 8, 10) geführt ist, wobei die Rolle (4, 8,10) einen Innenring (11) und einen Aussenring (12) mit einer Traktionsoberfläche (15) aufweist, **dadurch gekennzeichnet, dass** der Aussenring (12) einen Kunststoffring (20) umfasst, welcher auf seiner Aussenseite die Traktionsoberfläche (15) bildet.

2. Aufzugsanlage nach Anspruch 1, wobei der Aussenring (12) einen inneren Ring (21) aus Metall und einen äusseren Ring (20) aus Kunststoff umfasst.

3. Aufzugsanlage nach Anspruch 2, wobei der innere Ring (21) Bordscheiben (19) hat.

4. Aufzugsanlage nach Anspruch 1, wobei der Aussenring (12) einstückig als Kunststoffring (20) ausgebildet ist.

5. Aufzugsanlage nach einem der vorhergehenden Ansprüche, wobei die Traktionsoberfläche (15) bombiert ausgeführt ist.

6. Aufzuganlage nach einem der Ansprüche 1 bis 4, wobei die Traktionsoberfläche (15) konturiert ausgeführt ist.

7. Aufzugsanlage nach Anspruch 6, wobei die Traktionsoberfläche (15) komplementär zu einem Querschnitt des riemenartigen Tragmittels (5) ausgeführt ist.

8. Aufzugsanlage nach Anspruch 7, wobei die Traktionsoberfläche (15) in einer Umfangsrichtung mehrere im Wesentlichen V-förmige Rippen und mehrere im Wesentlichen V-förmige Nuten umfasst.

9. Aufzugsanlage nach einem der vorhergehenden Ansprüche, wobei der Aussenring (12) Bordscheiben (17) hat.

10. Aufzugsanlage nach einem der vorhergehenden Ansprüche, wobei der Kunststoffring (20) zumindest ein Polyamid umfasst.

11. Aufzugsanlage nach Anspruch 10, wobei dem Polyamid zumindest ein Additiv zugesetzt ist.

12. Aufzugsanlage nach einem der vorhergehenden Ansprüche, wobei der Kunststoffring (20) zumindest einen elektrisch leitfähigen Kunststoff umfasst.

13. Aufzugsanlage nach einem der vorhergehenden Ansprüche, wobei die Traktionsoberfläche (15) derart ausgeführt ist, dass mit einer Ummantelung des riemenartigen Tragmittels (5) aus Polyurethan ein Reibungskoeffizient µ zwischen 0.1 und 0.5, bevorzugt zwischen 0.2 und 0.4, besonders bevorzugt zwischen 0.25 und 0.35 resultiert.

14. Aufzugsanlage nach einem der vorhergehenden Ansprüche, wobei die Rolle (4, 8, 10) eine Gegengewichtsumlenkrolle (10) oder eine Kabinenumlenkrolle (8) ist.

15. Aufzugsanlage nach einem der vorhergehenden Ansprüche, wobei der Kunststoffring (20) ein Dicke, gemessen von der Traktionsoberfläche (15) in Richtung eines Rotationszentrums der Rolle (4, 8, 10), von mindestens 5mm, vorzugsweise von mindestens 7mm, besonders bevorzugt von mindestens 10mm aufweist.
